(19) Europäisches Patentamt
European Patent Office
Office européen des brevets

(11) Numéro de publication: **0 383 698 A1**

(12) # DEMANDE DE BREVET EUROPEEN

(21) Numéro de dépôt: **90420023.5**

(51) Int. Cl.[5]: **C08L 83/00**

(22) Date de dépôt: **16.01.90**

(30) Priorité: **19.01.89 FR 8900860**

(43) Date de publication de la demande: **22.08.90 Bulletin 90/34**

(84) Etats contractants désignés: **AT BE CH DE DK ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Torres, Ghislaine**
**104, rue Ney**
**F-69006 Lyon(FR)**

(74) Mandataire: **Seugnet, Jean Louis et al**
**RHONE-POULENC CHIMIE Service Brevets**
**Chimie Centre de Recherches des Carrières**
**B.P. 62**
**F-69192 Saint-Fons Cédex(FR)**

(54) **Composition organopolysiloxane réticulable par réaction de polyaddition en un élastomère autoadhérent et/ou hydrophile et/ou organophile.**

(57) La présente invention concerne un composition organopolysiloxane réticulable en un élastomère par réaction de polyaddition d'au moins un organopolysiloxane vinylé A) porteur de groupe Si-Vinyle sur au moins un organohydrogénopolysiloxane B) porteur de groupe SiH, caractérisée en ce qu'elle comporte :
- comme organopolysiloxane (A) : un diorganopolysiloxane ($A_1$) fluide portant par molécule au moins deux groupes Si-Vinyle et au moins un radical organique époxy fonctionnel ayant de 4 à 20 atomes de carbone,
- comme organohydrogénopolysiloxane (B) : un organohydrogénopolysiloxane ($B_1$) présentant au moins trois groupes SiH par molécule et un seul atome d'hydrogène relié à un même atome de silicium, la quantité totale de B) par rapport à A) étant adaptée pour que le rapport molaire SiH/SiVinyle soit compris entre 0,6 et 8, de préférence entre 1,1 et 4,
- une quantité efficace d'un catalyseur (C) de la réaction de polyaddition.

Les compositions selon l'invention sont utilisables pour réaliser des revêtements auto-adhérents sur métaux et sont utilisables pour l'enrobage et l'encapsulation de circuits électroniques, ou pour enrober ou disperser un principe actif tel qu'un médicament, en vue de sa libération contrôlée.

EP 0 383 698 A1

# COMPOSITION ORGANOPOLYSILOXANE RETICULABLE PAR REACTION DE POLYADDITION EN UN ELASTOMERE AUTOADHERENT ET/OU HYDROPHILE ET/OU ORGANOPHILE

Les compositions organopolysiloxanes réticulables (durcissables) en élastomères par réaction de polyaddition (dénommée également réaction d'hydrosilylation) sont bien connues de l'homme de métier. Elles sont en particulier décrites dans les brevets US-A-2 915 497, US-A-3 284 406, US-A-3 436 366 et US-A-3 699 073.

Ces compositions connues ont fait leurs preuves sur le plan industriel et commercial. Toutefois, pour certaines applications particulières, elles présentent les inconvénients suivants : elles sont dépourvues d'adhérence. Pour remédier à cet inconvénient US-A-4 077 943 enseigne d'incorporer à la composition organopolysiloxane, un organohydrogénopolysiloxane présentant par molécule, au moins un groupe époxy ou ester. Des solutions analogues sont enseignées par US-A-3 996 195 et US-A-4 011 247. Cependant, il est souvent difficile d'obtenir une composition organopolysiloxane sous la forme d'un mélange homogène de l'organohydrogénopolysiloxane époxydé avec les autres organopolysiloxanes de la composition du fait de la non miscibilité de ces deux types d'organopolysiloxanes.

On obtient alors, après réticulation, un élastomère de mauvaise qualité, incomplètement réticulé et présentant un taux d'extractibles élevé.

Pour un autre type d'application particulière à savoir le conditionnement de principes actifs, tel que l'encapsulation de ce principe actif par un revêtement élastomère silicone réticulé ou la dispersion de ce principe actif au sein d'une matrice constituée par un élastomère réticulé, l'homme de métier est à la recherche d'élastomères silicones présentant une hydrophilie et/ou une organophilie adaptée à la nature chimique du principe actif et à son mode de libération (voie humide, voie sèche, contact solide/solide, etc .....) en relation avec une forme appropriée de conditionnement.

En effet, bien que les élastomères silicones soient largement utilisés dans le domaine de la libération contrôlée d'un principe actif, ils présentent l'inconvénient d'être très hydrophobes et souvent incompatibles avec un grand nombre de principes actifs hydrophiles et/ou organophiles.

Un premier type de solution consiste à ajouter des additifs à la composition élastomère silicone dans le but de compatibiliser les principes actifs avec l'élastomère. Ce type de solution a pour principal inconvénient la libération des additifs. Cette libération peut avoir une action néfaste sur la libération proprement dite du principe actif.

Un deuxième type de solutio consiste à utiliser une composition élastomère mixte d'une silicone et d'un polymère organique hydrophile (par exemple un polyoxyde d'alkylène) qui après co-réticulation donne un élastomère plus ou moins hydrophile ou organophile (voir par exemple EP-A-188 895). Ce type de solution présente l'inconvénient d'être coûteuse et techniquement délicate à mettre en oeuvre.

Un but de la présente invention est de proposer une composition organopolysiloxane réticulable en un élastomère par réaction de polyaddition présentant une adhérence convenable sur divers supports en particulier sur métaux et réticulable (durcissable) en un élastomère à température ambiante et/ou par chauffage à une température modérée (20-150 °C).

Un autre but de la présente invention est de proposer une composition du type ci-dessus pour la libération contrôlée de divers principes actifs, présentant une hydrophilie et/ou une organophilie adaptée et modulable à la nature chimique du principe actif et à son mode de libération en relation avec une forme appropriée de conditionnement.

Un autre but de la présente invention est de proposer une composition du type ci-dessus constituée d'un mélange homogène de polymères silicones miscibles entre eux et réticulable en un élastomère adhérent et transparent, en particulier pour son utilisation pour l'encapsulation de composants électriques ou électroniques.

Ces buts et d'autres sont atteints par la présente invention qui concerne en effet une composition organopolysiloxane réticulable en un élastomère par réaction de polyaddition d'au moins un organopolysiloxane vinylé A) porteur de groupe Si-Vinyle sur au moins un organohydrogénopolysiloxane B) porteur de groupe SiH, caractérisée en ce qu'elle comporte :

- comme organopolysiloxane (A) : un diorganopolysiloxane ($A_1$) fluide portant par molécule au moins deux groupes Si-Vinyle et au moins un radical organique époxy fonctionnel ayant de 4 à 20 atomes de carbone,
- comme organohydrogénopolysiloxane (B) : un organohydrogénopolysiloxane ($B_1$) fluide présentant au moins trois groupes SiH par molécule et un seul atome d'hydrogène relié à un même atome de silicium, la quantité totale de B) par rapport à A) étant adaptée pour que le rapport molaire SiH/SiVinyle soit compris entre 0,6 et 8, de préférence entre 1,1 et 4,
- une quantité efficace d'un catalyseur (C) de la réaction de polyaddition.

Les diorganopolysiloxanes ($A_1$) sont plus particulièrement choisis parmi ceux de formule :

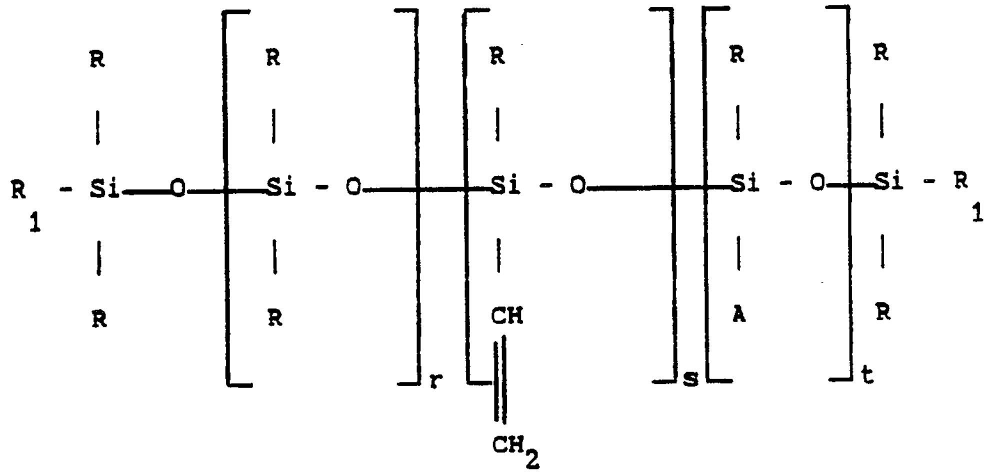

(1)

dans laquelle :
- les radicaux R sont des radicaux hydrocarbonés monovalents choisis parmi les radicaux alkyle en $C_1$-$C_{20}$, phényle, méthyle et trifluoro-3,3,3 propyle,
- les radicaux $R_1$, identiques ou différents sont choisis parmi un radical R, un radical A, un radical vinyle et un radical hydroxyle,
- le radical A est un radical organique époxy-fonctionnel ayant de 4 à 20 atomes de carbone,
- r est un nombre entier compris entre 1 et 500,
- s est un nombre entier compris entre 0 et 200,
- t est un nombre entier compris entre 0 et 100,

sous réserve que si s = 0, les deux radicaux $R_1$ sont un radical vinyle, et t est au moins égal à 1, si t = 0, au moins un des radicaux $R_1$ est un radical A et s est au moins égal à 2.

Et ceux de formule :

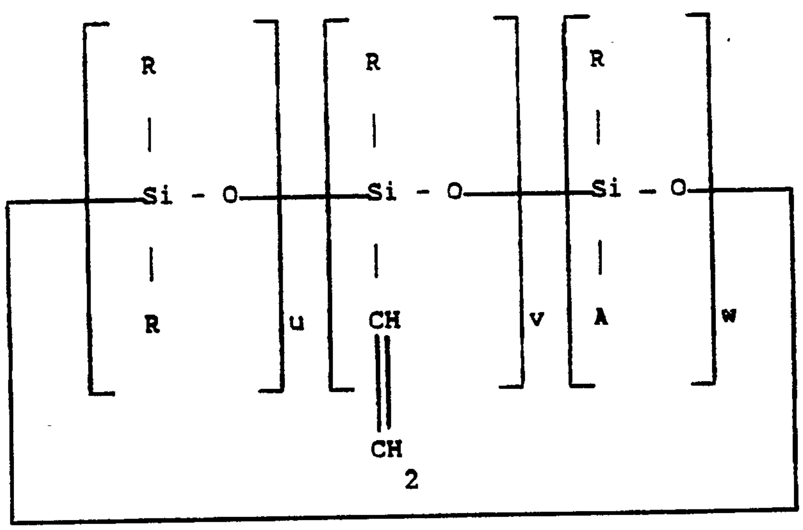

(2)

dans laquelle R et A ont la même signification qu'à la formule (1) ci-dessus.
- u est un nombre entier compris entre 0 et 7 inclus,
- v est un nombre entier compris entre 2 et 7 inclus,
- w est un nombre entier compris entre 1 et 7 inclus sous réserve que la somme de u + v + w soit au moins égale à 3 et inférieure à 10.

Dans la formule (1) ci-dessus, les produits préférés de formules (1) et (2) sont ceux pour lesquels au moins 80 % et jusqu'à 100 % en nombre des radicaux R sont des radicaux méthyle.

Dans le cas où les polymères de formules (1) ou (2) sont des huiles très visqueuses, des gommes ou des solides, on les introduit dans la composition organopolysiloxane sous la forme d'une solution dans un solvant organique hydrocarboné tel que le toluène ou le xylène.

Le radical organique époxy-fonctionnel présente de 4 à 20 atomes de carbone, de préférence de 5 à 12.

Des exemples de radicaux A sont les suivants :

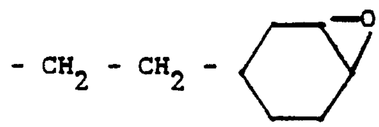

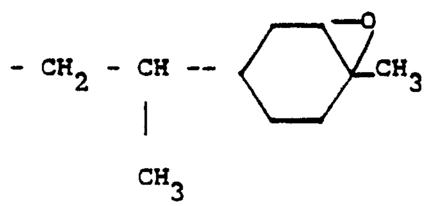

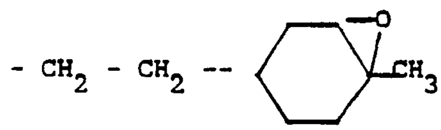

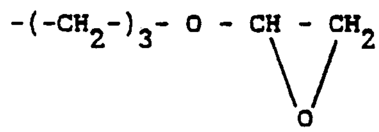

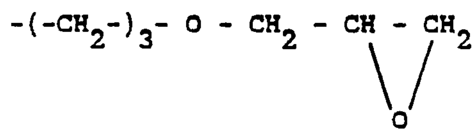

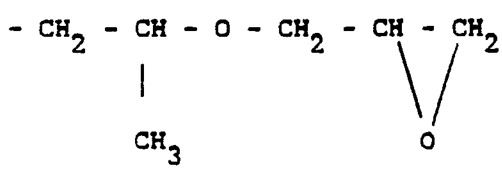

De préférence dans la formule (1) s et t sont au moins égaux à 1, r est compris entre 5 et 300 inclus.

De façon plus préférée s est compris entre 2 et 20 inclus, t est compris entre 1 et 30 inclus et r est compris entre 5 et 100 inclus.

Dans la formule (2) u + v + w est compris, de préférence, entre 3 et 6 inclus.

Les polydiorganosiloxanes ($A_1$) peuvent être préparés de la façon suivante :

- on amorce, dans une première étape, la polymérisation d'au moins un oligomère polydiorganosiloxane cyclique cu linéaire portant par molécule au moins un radical vinyle lié directement à l'atome de silicium en présence d'une quantité catalytiquement efficace d'un catalyseur basique, et
- on ajoute, dans une deuxième étape, dans l'intervalle de temps situé entre le début et la fin de la polymérisation de la première étape, au moins un oligomère polydiorganosiloxane cyclique ou linéaire portant par molécule au moins un radical organique époxy-functionnel ayant de 4 à 20 atomes de carbone.

Ce procédé de préparation est décrit en détail dans la demande de brevet français 88/04 138 déposée le 24 mars 1988 au nom de la Demanderesse et citée commme référence.

Les oligomères linéaires ou cycliques porteurs d'un groupe vinyle sont connus. Ils sont en particulier décrits dans l'ouvrage de NOLL, Chemistry and Technology of Silicones, Academic Press édition de 1968 en langue anglaise, ainsi que dans de nombreux brevets (US-A-3 220 972, US-A-3 284 406 et US-A-3 436 366).

On peut utiliser dans le procédé de préparation des polymères ($A_1$) les différents catalyseurs alcalins dont l'emploi est préconisé pour la polymérisation d'oligomères diorganopolysiloxanes (c'est-à-dire les diorganopolysiloxanes de faible masse moléculaire et de faible degré de polymérisation).

Ces catalyseurs alcalins sont par exemple décrits à la page 227 de l'ouvrage de NOLL "Chemistry and Technology of Silicones" Academic Press, édition 1968 en langue anglaise. Ces catalyseurs alcalins englobent les hydroxydes de métaux alcalins, en particulier l'hydroxyde de lithium, l'hydroxyde de potassium, l'hydroxyde de sodium, l'hydroxyde de cesium. Ils englobent également les silanolates de métaux alcalins, en particulier de potassium ou de sodium, les alcoxydes et les siliconates de métaux alcalins.

De façon à accélérer la réaction, il est avantageux d'utiliser en combinaison avec le catalyseur alcalin un agent séquestrant le cation du catalyseur, à la dose de 0,005 à 2 moles d'agent séquestrant par équivalent hydroxyde de métal alcalin ou alcalino-terreux.

Comme agents séquestrants utilisables dans l'application on peut notamment utiliser les éther-couronnes ("crown-ethers") selon l'enseignement des brevets US-A-4 157 337 et US-A-4 138 543, cités comme référence et les tris(oxoalkyl) amine selon l'enseignement des brevets US-A-4 362 855 et EP-A-180 527.

Parmi ces agents séquestrants on préfère tout particulièrement utiliser un composé polyhétéromacropolycyclique cryptand renfermant 2 atomes d'azote tertiaire reliés entre eux par 3 radicaux organiques hydrocarbonés divalents renfermant des hétéroatomes choisis parmi l'oxygène et le soufre. Ces cryptands sont décrits en détail dans les brevets US-A-4 138 543 et US-A-4 362 855 précités.

Les cryptands préférés répondent à la formule :

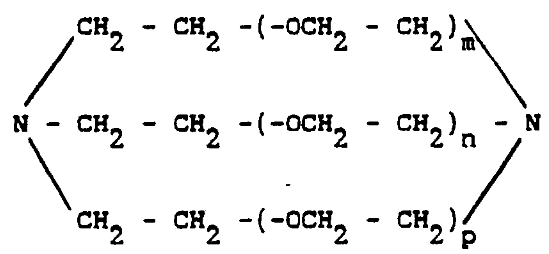

(3)

dans laquelle m est égal à 2 ou 3 et n et p sont choisis parmi 1, 2 et 3.

Le produit de formule (3) pour lequel m = n = p = 2 est nommé cryptand (2,2,2).

Les système destiné à catalyser la réaction de polymérisation selon l'invention, peut être utilisé en proportions très variées. Il se révèle particulièrement remarquable du fait qu'il peut être mis en oeuvre en très faible quantité. Habituellement, on utilise de 0,1 à 1 000 mg et préférentiellement de 1 à 100 mg d'équivalent d'hydroxyde de métal alcalin ou alcalino-terreux par kg de diorganopolysiloxane chargé. L'équivalent d'hydroxyde pour un dérivé alcalin ou alcalino-terreux quelconque est exprimé par le poids de la quantité d'hydroxyde du métal que l'on devrait ajouter et qui correspondrait au même nombre d'atomes grammes de métal alcalin ou alcalino-terreux que celui du dérivé alcalin ou alcalino-terreux utilisé. Par ailleurs, le rapport molaire agent séquestrant sur équivalent hydroxyde de métal alcalin ou alcalino-terreux est habituellement compris entre 0,005 et 2 et préférentiellement entre 0,01 et 1.

La température de la polymérisation peut se situer dans la gamme usuelle de température comprise entre 25 °C et 200 °C et de préférence entre 80 °C et 180 °C. Durant la polymérisation, l'eau est éventuellement éliminée du milieu réactionnel (dans le cas où la charge de départ est formée d'oligomère de formule (3) avec $R_2$ = hydroxyle), au fur et à mesure de sa formation par tout moyen approprié (distillation azéotropique ; élimination de l'eau sous pression réduite et sous pression de gaz inerte en particulier l'azote ...). Dans ces conditions, le système catalytique selon l'invention permet de réduire dans une proportion très importante la durée de la réaction de polymérisation. Par rapport au catalyseur alcalin utilisé seul, le gain peut atteindre et dépasser 75 %. Lorsque la viscosité souhaitée est atteinte, il est recommandé de désactiver le système catalytique par addition d'une très faible quantité d'un composé

acide, de préférence du $CO_2$.

Dès l'instant où la polymérisation est amorcée (temps $t_1$) et avant de stopper cette polymérisation au degré voulu (temps $t_2$), on ajoute entre $t_1$ et $t_2$ l'oligomère polydiorganosiloxane cyclique ou linéaire portant par molécule au moins un radical époxy-fonctionnel.

Les temps $t_1$ et $t_2$ sont appréciés classiquement par mesure de la viscosité du mélange réactionnel.

De façon surprenante et inattendue, les fonctions époxy ne sont pas affectées par les catalyseurs basiques dans la mesure où les oligomères sont ajoutés entre $t_1$ et $t_2$.

Ces fonctions époxy ne sont pas dégradées malgré l'alcalinité du mélange réactionnel.

De plus, les fonctions époxy ne sont pas dégradées même si le milieu réactionnel est porté jusqu'à 200 °C. Il est toutefois souhaitable d'opérer à une température inférieure à 180 °C et supérieure à 80 °C.

Un tel résultat peut être aussi atteint si on ajoute les oligomères, porteurs d'au moins un radical époxy-fonctionnel aux oligomères porteurs d'au moins un groupe vinyle avant de commencer (amorcer) la polymérisation. Par contre on constate une dégradation des fonctions époxy si on utilise un catalyseur acide pour faire la polymérisation. Les oligomères porteurs d'au moins un radical organique époxy-fonctionnel peuvent être en particulier choisis parmi ceux de formule :

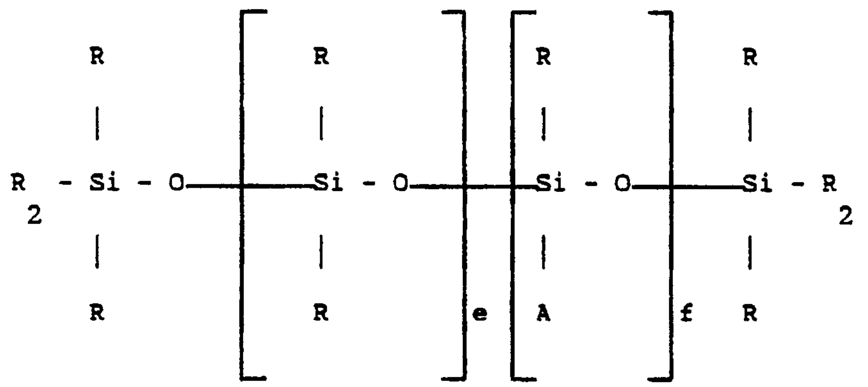

(4)

dans laquelle les radicaux R et A ont la même signification qu'à la formule (1) ci-dessus et $R_2$ est choisi parmi un radical R, un groupe hydroxyle et un groupe A,

- e est un nombre entier choisi entre 0 et 50,
- f est un nombre entier choisi entre 0 et 20,

sous réserve que si f = 0, au moins un des radicaux $R_2$ est A.

Et ceux de formule :

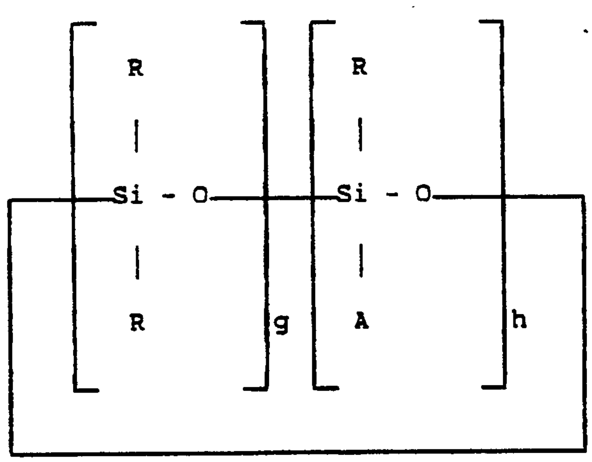

(5)

dans laquelle les radicaux R et A ont la signification donnée à la formule (1) ci-dessus,

- g est un nombre entier compris entre 0 et 10 inclus, et
- h est un nombre entier compris entre 1 et 10 inclus sous réserve que la somme g + h soit au moins égale à 3.

Les oligomères à fonction époxy sont des produits connus et décrits dans la littérature ; ils sont en

particulier décrits dans les brevets US-A-3 455 877, US-A-4 252 933 et FR-A-2 012 012, cités comme référence.

Ils peuvent être préparés sans difficulté par réaction d'hydrosilylation des polyhydrogénoorganosiloxanes correspondants aux formules (4) et (5) dans lesquelles le radical A est remplacé par un atome d'hydrogène, sur le composé organique époxy-fonctionnel à insaturation alcénique correspondant au radical A.

L'homme de l'art sait choisir les oligomères de départ à fonction vinyle ou époxy en vue d'obtenir les polymères désirés de formules (1) et (2).

Suivant les choix des oligomères de départ on peut obtenir un mélange de produits de formules (1) et (2) qu'il est facile de séparer par distillation. Dans le cas où l'on veut obtenir des produits de formule (1) dans laquelle $R_1$ est un groupe hydroxyle il suffit d'arrêter la polymérisation en neutralisant le catalyseur alcalin.

Dans le cas où l'on veut obtenir des produits de formule (1) dans laquelle $R_1$ est un radical R, il suffit pour cela, après la polymérisation, d'ajouter par exemple un composé organosilicié susceptible de réagir avec les hydroxyle terminaux par exemple un silane ou un silazane de formule :

$(R)_3SiCl$ , $(R)_3SiNHSi(R)_3$ ,

ou d'ajouter en fin de polymérisation un bloqueur de formule :

$(R)_3SiOSi(R)_3$

De la même façon si l'on veut obtenir un polymère de formule (1) dans laquelle $R_1$ est un radical vinyle ou un radical A il suffit d'effectuer les mêmes opérations que ci-dessus avec un silane ou un silazane de formule :

$R_1(R)_2SiCl$ , $R_1(R)_2SiNHSi(R)_2R_1$

ou un disiloxane de formule :

$R_1(R)_2$ Si- O - Si $(R)_2$ $R_1$

$R_1$ désignant respectivement un radical vinyle ou le radical A.

La réaction de polymérisation est de préférence mise en oeuvre en masse, toutefois il est tout à fait possible d'utiliser un solvant tel que les hydrocarbures aliphatiques ou aromatiques.

L'organohydrogénopolysiloxane ($B_1$) utilisable est bien connu et est décrit en particulier dans les brevets précités US-A-2 915 497, US-A-3-284 406, US-A-3 436 366 et US-A-3 699 073.

L'organohydrogénosiloxane ($B_1$) peut être un polymère linéaire, cyclique ou ramifié ou ses mélanges contenant des motifs siloxane de formules : $RSiO_{1,5}$, $R_2SiO_{0,5}$, $R_2SiO_{0,5}$, $SiO_2$, RHSiO et $HSiO_{1,5}$ dans lesquelles le radical R a la signification donnée à la formule (1) ci-dessus.

Le catalyseur (C) de la réaction de polyaddition est de préférence un métal ou un composé (sel ou complexe) à base d'un métal du groupe du platine, et surtout le platine.

Les catalyseurs au platine sont amplement décrits dans la littérature, on peut en particulier citer les complexes du platine et d'un produit organique décrit dans les brevets américains US-A-3 159 601, US-A-3 159 602, US-A-3 220 972 et les brevets européens EP-A-57 459, EP-A-188 978 et EP-A-190 530 et les complexes du platine et d'organopolysiloxane vinylé décrits dans les brevets américains US-A-3 419 593, US-A-3 713 334, US-A-3 377 432 et US-A-3 814 730.

Le catalyseur au platine (C) est généralement introduit de manière à fournir de 1 à 500 ppm (partie par million), de préférence de 5 à 80 ppm de platine, exprimé en métal par rapport au poids total des organopolysiloxanes (A).

Selon un mode de réalisation préféré, tout ou partie de l'organohydrogénopolysiloxane (B) est un organohydrogénopolysiloxane ($B_2$) présentent en outre par molécule au moins un groupe époxy fonctionnel ayant de 4 à 20 atomes de carbone.

Les organohydrogénopolysiloxanes époxydés ($B_2$) linéaires, cycliques ou ramifiés sont des produits connus dont les procédés de préparation sont en particulier décrits dans les brevets américains précités US-A-3 996 195, US-A-4 077 943, le brevet français FR-A-1 345 921, le brevet allemand DE-A-1 272 550 et le brevet français FR-A-2 526 800, cités comme référence.

L'invention a permis de mettre en évidence que le polymère ($A_1$) est compatible avec le polymère ($B_2$) et permet donc d'introduire des quantités très importantes de polymère ($B_2$) au sein de la composition tout en obtenant une composition organopolysiloxane se présentant sous la forme d'un mélange homogène.

En utilisant conjointement les polymères ($A_1$) et ($B_2$), l'homme de métier a ainsi la possibilité d'introduire les quantités nécessaires d'époxy en fonction de la propriété qu'il souhaite conférer à l'élastomère, à savoir l'adhérence et/ou l'hydrophilie et/ou l'organophile.

La composition organopolysiloxane selon l'invention peut comporter en outre comme organopolysiloxane (A) une huile diorganopolysiloxane ($A_2$) sensiblement linéaire et bloquée à chaque extrémité de sa chaîne par un motif vinyldiorganosiloxy dont les radicaux organiques liés aux atomes de silicium sont

choisis parmi les radicaux méthyle, éthyle, n-propyle, vinyle phényle et trifluoro-3,3,3 propyle, de viscosité de 100 à 300 000 mPa.s à 25 °C.

De façon à améliorer les propriétés mécaniques de l'élastomère sans pour autant ajouter de charge minérale, il est recommandé d'incorporer en outre comme organopolysiloxane (A) une résine organopolysiloxane ($A_3$), solide à température ambiante, comportant des motifs M et Q respectivement de formules $R_3SiO_{0,5}$ et $SiO_2$, dans lesquelles R′ est choisi parmi les radicaux méthyle, éthyle, n-propyle, phényle et vinyle, résine dans laquelle d'une part le rapport molaire M/Q est compris entre 0,5 et 1, et d'autre part, 1,5 à 10 moles d'atomes de silicium comportent un radical vinyle directement lié à l'atome de silicium, cette résine ($A_3$) peut présenter un motif D de formule $R'_2SiO$, R′ ayant la signification ci-dessus, de telle sorte qu'il reste de 1 à 10 moles de motif D par rapport au nombre total de motifs MDQ présents dans la résine ($A_3$).

La composition organopolysiloxane selon l'invention peut contenir en outre une charge minérale ou métallique (D) pour améliorer ses propriétés mécaniques.

Cette charge (D) peut être notamment choisie parmi :
- des charges renforçantes telles que la silice de combustion, de précipitation,
- des charges semi-renforçantes ou non renforçantes telles que le quartz broyé, la silice de diatomées, le talc, le mica, le carbonate de calcium, l'argile calcinée, les oxydes de magnésium, de titane, de fer, de zinc, d'aluminium, de plomb, de cuivre, les oxydes et hydroxydes de terres rares (tels que l'oxyde cérique, l'hydroxyde cérique), le silicate de zinc, le sulfate de baryum, le métaphosphate de baryum ou de zinc, le borate de plomb, le carbonate de plomb, le borate de zinc, le borate de calcium, le borate de baryum, le silicate d'aluminium, le noir de carbone,
- des poudres métalliques telles que celles à base de cuivre, de fer, de plomb, d'aluminium, de zinc.

les compositions de l'invention sont généralement conditionnées en deux emballages, le catalyseur (C) étant dans le même emballage que les organopolysiloxanes (A).

Les compositions de l'invention, réticulables en un élastomère adhérent, sont utiles à des applications telles que l'enrobage de composants électroniques, le revêtement de pièces électriques, l'imprégnation de transformateurs de retour du spot pour téléviseurs et le revêtement de jonctions pour dispositifs semiconducteurs.

On peut si on le désire appliquer les compositions de l'invention sous la forme d'une solution dans un solvant organique approprié comme le toluène ou le xylène, selon les besoins de l'utilisation.

Les compositions selon l'invention, hydrophiles et/ou organophiles sont utilisables pour enrober, encapsuler ou disperser dans une matrice d'élastomère, un principe actif tel que, notamment, des catalyseurs, des colorants, des durcisseurs, des détergents, des produits pharmaceutiques, enzymes, des parfums, des aliments, des combustibles, des encres, des insecticides, des métaux, des médicaments, des monomères, des agents odorants, des huiles, des phéromones, des plastifiants, des propulseurs, des solvants, des substrats solides contenant un constituant actif absorbé, des vitamines, des semences végétales, des embryons végétaux et des tissus méristématiques.

Les compositions selon l'invention sont conservées en deux emballages distincts. Le premier emballage contient l'organopolysiloxane (A) et le catalyseur (C), le deuxième emballage contient l'organohydrogénopolysiloxane (B). Toutefois dans le cas où les compositions comportent à la fois un polymère ($A_1$) et un polymère ($B_2$) il est recommandé de stocker ce mélange dans un emballage exempt de catalyseur (C), de préférence dans un troisième emballage.

## - EXEMPLE COMPARATIF 1 :

On mélange à température ambiante :
- 10 g d'un polydiméthylsiloxane de formule moyenne :

$$(CH_3)_3Si - (O - \underset{Me}{\overset{Me}{|}}\!Si)_{90}\ (O - \underset{H}{\overset{Me}{|}}\!Si)_{10}\ OSi\ (CH_3)_3$$

- 68,7 g d'un polydiméthylsiloxane bloqué à chaque extrémité de la chaîne par un motif diméthylvinylsiloxy et de viscosité 600 mPa.s à 25 °C,
- 10 mg d'une solution de platine dans l'hexane titrant 8,7 % de platine métal.

Le mélange est ensuite coulé sur une plaque de verre recouverte d'un polyester antiadhérent, afin d'obtenir un film d'épaisseur égale à 220 µm et les propriétés mécaniques sont rassemblées dans le tableau I ci-après. Le taux d'extractible de l'élastomère dans l'hexane est de : 3,1 %.

- EXEMPLE COMPARATIF 2 :

On homogénéise à température ambiante :

- 10 g d'un polyorganohydrogénosiloxane porteur de fonction époxy, de formule moyenne :

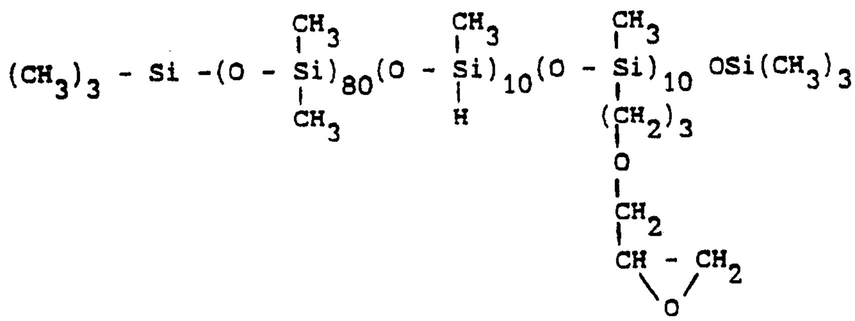

- 68,7 g d'un polydiméthylsiloxane bloqué à chaque extrémité de la chaîne par un motif diméthylvinylsiloxy et de viscosité 600 mPa.s à 25 °C,
- 10 mg d'une solution de platine dans l'hexane titrant 8,7 % de platine métal.

Le mélange est ensuite coulé sur une plaque de verre recouverte d'un polyester antiadhérent, afin d'obtenir un film d'épaisseur égale à 220 µm.

La vulcanisation est réalisée à 100 °C pendant 30 minutes.

L'élastomère obtenu est homogène, transparent.

Les propriétés mécaniques de l'élastomère obtenu sont rassemblées dans le tableau I ci-après.

Le taux d'extractibles de l'élastomère est de 3,5 %.

- EXEMPLE COMPARATIF 3 :

On homogénéise à température ambiante :

- 10 g d'un polyorganohydrogénosiloxane porteur de fonction époxy, de formule moyenne :

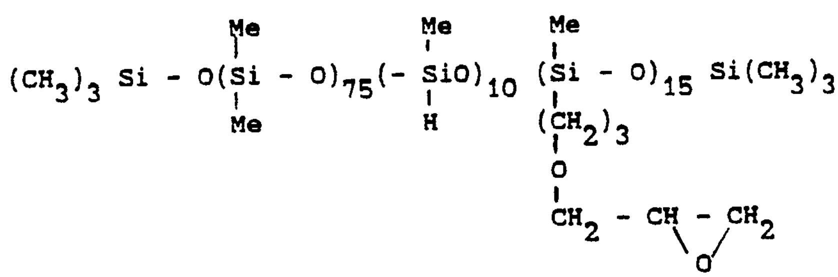

- 68,9 g d'un polydiméthylsiloxane bloqué à chaque extrémité de la chaîne par un motif diméthylvinylsiloxy et de viscosité 600 mPa.s à 25 °C,
- 10 mg d'une solution de platine dans l'hexane titrant 8,7 % de platine métal.

Le mélange ainsi obtenu est hétérogène dû à la non-miscibilité des huiles polydiméthylsiloxane et polyorganohydrogénosiloxane époxydé.

Après réticulation pendant 1 heure à 100 °C, le mélange obtenu est collant. Le taux d'extractibles est élevé (13 %), témoin d'une mauvaise réticulation.

- EXEMPLE 4 :

Exemple 4a : préparation du polyorganovinylsiloxane époxydé de formule moyenne :

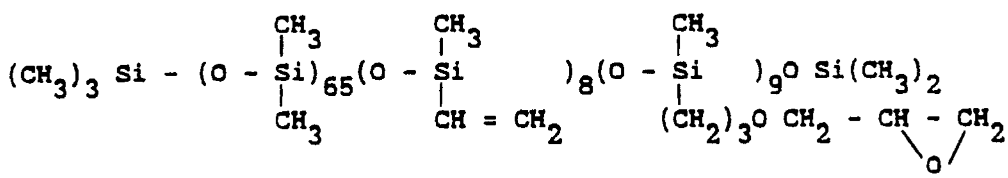

On introduit dans un réacteur de un litre muni d'un système d'agitation :
- 29,1 g de tétraméthyl-1,3,5,7 tétravinyl-1,3,5,7 cyclotétrasiloxane,
- 78,4 g d'octaméthylcyclotétrasiloxane,
- 100 g d'huile de formule moyenne :

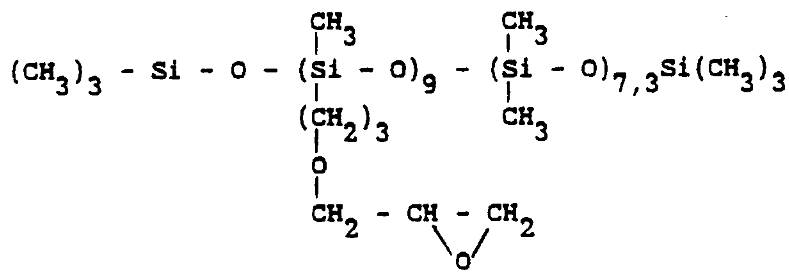

On élève ensuite la température à 140 °C.

Le milieu initialement hétérogène, s'homogénéise aux environs de 60 °C.

Lorsque la température atteint 140 °C, on ajoute :
- 2,5 mg d'équivalent KOH introduit sous forme de siliconate de potassium, et
- 2 mg de cryptant(2,2,2), à savoir le diazo-1,10 hexaoxa-4,7,13,16,21,24 bicyclo(8,8,8)hexacosane.

La réaction est suivie par la mesure du taux de volatils effectuée de la manière suivante :

on introduit 2 g de mélange dans une coupe en aluminium que l'on porte à 175 °C durant deux heures sous un vide de 1,3 KPa.

Après refroidissement, la coupe est pesée, ce qui permet d'évaluer les pertes pondérales et donc le taux de volatils.

Lorsque celui-ci atteint des valeurs de l'ordre de 1,5 % (au bout de 6 heures environ), l'agitation est arrêtée et la polymérisation neutralisée par introduction de $CO_2$ solide.

Exemple 4b : préparation de l'élastomère :

on homogénéise à température ambiante :
- 10 g d'un polyorganohydrogénosiloxane porteur de fonction époxy, de formule moyenne :

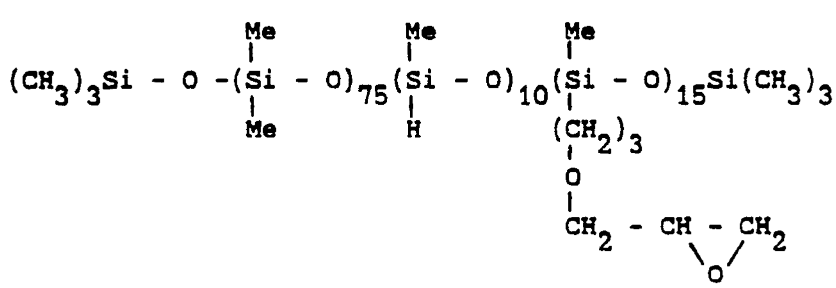

- 7,9 g d'un polyorganovinylsiloxane préparé en suivant le mode opératoire de l'exemple 4a,
- 10 mg d'une solution de platine dans l'hexane titrant 8,7 % de platine métal.

Le mélange obtenu est homogène. Il est coulé sur une plaque de verre recouverte d'un polyester antiadhérent afin d'obtenir un film d'épaisseur égale à 220 microns.

La vulcanisation est réalisée à 100 °C pendant 30 minutes.

L'élastomère obtenu est homogène, transparent et ses propriétés mécaniques sont rassemblées dans le tableau I ci-après.

Le taux d'extractibles de l'élastomère est bon et égal à 4,5 %.

- EXEMPLE 5:

On homogénéise à température ambiante :

- 10 g d'un polyorganohydrogénosiloxane porteur de fonction époxy, de formule moyenne :

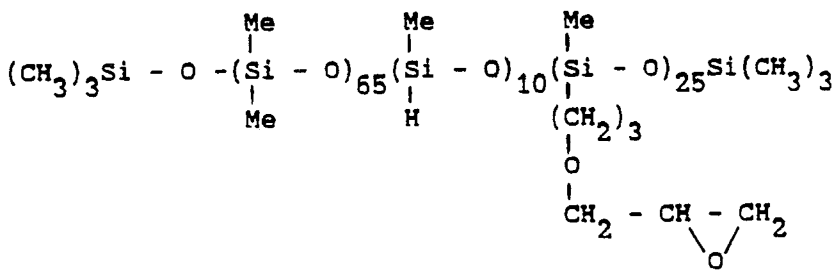

- 9 g d'un polyorganovinylsiloxane porteur de fonction époxy, de formule moyenne :

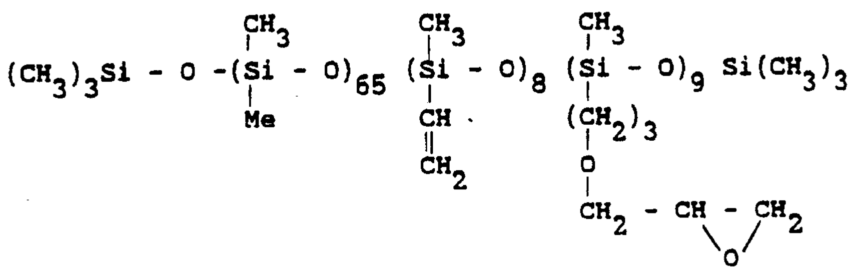

préparée conformément à l'exemple 4a,
- 10 mg d'une solution de platine dans l'hexane titrant 8,7 % de platine métal.

Le mélange obtenu est homogène. Il est coulé sur une plaque de verre recouverte d'un polyester antiadhérent afin d'obtenir un film d'épaisseur égale à 220 µm.

La vulcanisation est réalisée à 100 °C pendant 30 minutes.

L'élastomère obtenu est homogène, transparent et ses propriétés mécaniques sont rassemblées dans le tableau I ci-après.

Le taux d'extractibles de l'élastomère est bon et égal à 4,6 %

- EXEMPLE 6 :

Le comportement relatif des élastomères, préparés conformément aux exemples 1, 4 et 5 vis-à-vis de la perméabilité à un principe actif organique, est testé in-vitro.

Pour celà on prépare quatre cellules de diffusion dans lesquelles la phase donneuse, contenant du principe actif en solution dans l'eau est séparée de la phase réceptive (solution aqueuse) par un film polymère de 220 µm d'épaisseur.

La cellule de diffusion est constituée de deux compartiments en verre, surmontés d'un orifice pour permettre, dans la phase donneuse, le remplissage et dans la phase réceptrice les prélèvements et/ou le changement d'eau.

L'agitation dans les deux compartiments est assurée par un barreau aimanté.

La membrane, préalablement préparée, qui sépare les deux compartiments est serrée entre deux joints de téflon qui assurent l'étanchéité.

Le volume de chaque phase est égal à 60 ml.

La surface utile de la membrane est égale à 4,15 cm².

Chaque cellule est thermostatée à 25 °C.

La vitesse de diffusion est mesurée en dosant la quantité de principe actif dans la phase de réception en fonction du temps.

Deux molécules organiques de principe actif ont ainsi été testées :

- l'acide benzoïque 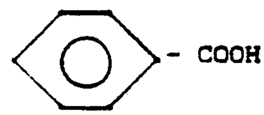

- l'acide diphénylacétique 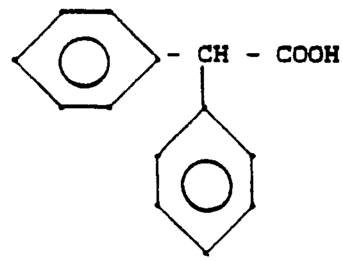

Le dosage est réalisé par spectrophotométrie UV à λ max : 254 nm.

Pour chaque essai la concentration en principe actif de la phase donneuse est de 300 mg/l.

Les cinétiques d'élution $\{Q/Q_0 = f(t)\}$ de l'acide benzoïque à travers des élastomères silicones présentant des taux de fonctionnalisation croissant sont rassemblées dans le tableau 2 ci-après.

En examinant le tableau II on peut remarquer que le taux d'époxy dans les élastomères obtenus peut être très élevé (18 %) en poids dans la composition de l'exemple 5.

Q correspond à la quantité d'acide benzoïque éluée à l'instant t par rapport à la quantité initialement présente $Q_0$ dans la phase donneuse.

Celles de l'acide diphénylacétique sont rassemblées dans le tableau 3 ci-après.

On remarque que la vitesse de l'élution croit avec le taux de groupements époxy dans le réseau.

Cette augmentation de la perméabilité de l'élastomère vis-à-vis d'un principe actif donné lorsque le taux de groupement époxy augmente , est directement relié à l'augmentation de la solubilité du principe actif dans le matériau élastomère.

Dans le tableau 4 sont rassemblées respectivement les solubilités de l'acide benzoïque et de l'acide diphénylacétique dans les élastomères préparés à partir des compositions des exemples 1, 4 et 5.

TABLEAU 1

| PROPRIETES MECANIQUES | | | | |
|---|---|---|---|---|
| REFERENCE | MODULE D'YOUNG (MPa) | MODULE SECANT 1 à 100 % (MPa) | R/R (MPa) | A/R (%) |
| 1 | 1,61 | 1,94 | 0,434 | 61,31 |
| 2 | 1,58 | 2,33 | 0,45 | 61,69 |
| 4 | 1,55 | 0,806 | 0,085 | 8,88 |
| 5 | 1,396 | 0,88 | 0,089 | 8,48 |
| - la résistance à la rupture (R/R) en MPa selon la norme NF-T-46 002, | | | | |
| - l'allongement à la rupture (A/R) en MPa selon la norme NF-T-46 002, | | | | |
| - le module (M.Y.) en MPa pour un allongement de 100 %. | | | | |

TABLEAU 2

$Q/Q_o = f(t)$ pour acide benzoïque à travers des membranes silicones à taux d'époxy croissant

| | | TEMPS (h) | | | | | |
|---|---|---|---|---|---|---|---|
| EXEMPLE | % W/W de 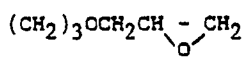 | 1 | 1,5 | 2 | 2,5 | 6 | 10 |
| 1 | 0 | 0,13 | 0,26 | 0,33 | 0,42 | 1 | 1,7 |
| 4 | 12 | 0,53 | 0,83 | 1,12 | 1,48 | 2,9 | 4,8 |
| 5 | 18 | 0,8 | 1,43 | 1,76 | 2,33 | 4,9 | 8 |

- W/W : poids par poids

TABLEAU 3

$Q/Q_o = f(t)$ pour acide diphénylacétique à travers des membranes silicones à taux d'époxy croissant

| | | TEMPS (h) | | | |
|---|---|---|---|---|---|
| EXEMPLE | % W/W de $(CH_2)_3OCH_2CH(O)CH_2$ | 2 | 4 | 8 | 10 |
| 1 | 0 | 0,59 | 0,99 | 2,37 | 2,98 |
| 4 | 12 | 0,2 | 1,39 | 5,18 | 6,5 |
| 5 | 18 | 2,58 | 4,78 | 9,15 | 10,9 |

- W/W : poids par poids

TABLEAU 4

| | SOLUBILITE % (W/W) | |
|---|---|---|
| REFERENCE DU SILICONE EXEMPLE | ACIDE BENZOIQUE | ACIDE DIPHENYLACETIQUE |
| 1 | 0,075 | 0,156 |
| 4 | 1,07 | 1,06 |
| 5 | 1,39 | 1,2 |
| Solubilité de l'acide benzoïque et de l'acide diphénylacétique dans des silicones à taux d'époxy croissant. | | |

## Revendications

1. - Composition organopolysiloxane réticulable en un élastomère par réaction de polyaddition d'au moins un organopolysiloxane vinylé A) porteur de groupe Si-Vinyl sur au moins un organohydrogénopolysiloxane B) porteur de groupe SiH, caractérisée en ce qu'elle comporte :
- comme organopolysiloxane (A) : un diorganopolysiloxane ($A_1$) fluide portant par molécule au moins deux groupes Si-Vinyle et au moins un radical organique époxy fonctionnel ayant de 4 à 20 atomes de carbone,
- comme organohydrogénopolysiloxane (B) : un organohydrogénopolysiloxane ($B_1$) présentant au moins trois groupes SiH par molécule et un seul atome d'hydrogène relié à un même atome de silicium, la quantité totale de B) par rapport à A) étant adaptée pour que le rapport molaire SiH/SiVinyle soit compris entre 0,6 et 8, de préférence entre 1,1 et 4,
- une quantité efficace d'un catalyseur (C) de la réaction de polyaddition.

2.- Composition organopolysiloxane selon la revendication 1, caractérisée en ce que tout ou partie de l'organohydrogénopolysiloxane (B) est un organohydrogénopolysiloxane ($B_2$) présentant en outre par molécule au moins un groupe époxy fonctionnel ayant de 4 à 20 atomes de carbone.

3. - Composition organopolysiloxane selon la revendication 1 ou 2, caractérisée en ce qu'elle comporte en outre comme organopolysiloxane (A) une huile diorganopolysiloxane ($A_2$) sensiblement linéaire et bloquée à chaque extrémité de sa chaîne par un motif vinyldiorganosiloxy dont les radicaux organiques liés aux atomes de silicium sont choisis parmi les radicaux méthyle, éthyle, n-propyle, vinyl, phényle et trifluoro-3,3,3 propyle, de viscosité de 100 à 300 000 mPa.s à 25 °C.

4. - Composition organopolysiloxane selon l'une quelconque des revendications précédentes, caractérisée en ce qu'elle comporte en outre comme organopolysiloxane (A) une résine organopolysiloxane ($A_3$), solide à température ambiante, comportant des motifs M et Q respectivement de formules $R_3SiO_{0,5}$ et $SiO_2$, dans lesquelles R′ est choisi parmi les radicaux méthyle, éthyle, n-propyle, phényle et vinyle, résine dans laquelle d'une part le rapport molaire M/Q est compris entre 0,1 et 1, et d'autre part, 1,5 à 10 moles d'atomes de silicium comportent un radical vinyle directement lié à l'atome de silicium.

5. - Composition organopolysiloxane selon la revendication 4, caractérisée en ce que la résine organopolysiloxane ($A_3$) contient en outre un motif D de formule $R'_2SiO$, R′ ayant la signification ci-dessus, de telle sorte qu'il reste de 1 à 10 moles de motif D par rapport au nombre total de motifs MDQ présents dans la résine ($A_3$).

6. - Composition organopolysiloxane selon l'une quelconque des revendications précédentes, caractérisée en ce qu'elle comporte en outre une charge minérale ou métallique (D).

7. - Composition organopolysiloxane selon l'une quelconque des revendications précédentes, caractérisée en ce que le catalyseur (C) est un composé du platine ou un composé d'un métal du groupe du platine.

8. - Composition organopolysiloxane selon l'une quelconque des revendications précédentes, caractérisée en ce que le diorganopolysiloxane ($A_1$) est choisi parmi ceux de formules :

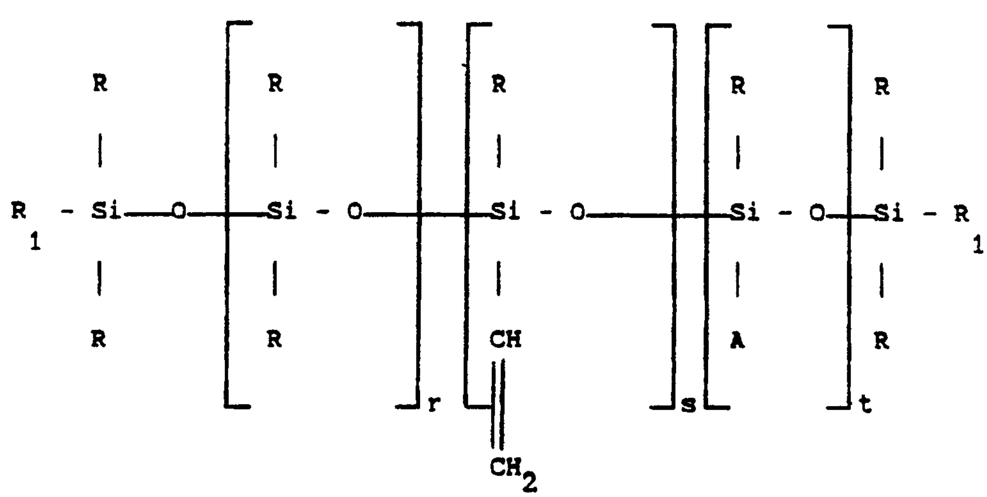
(1)

dans laquelle :
- les radicaux R sont des radicaux hydrocarbonés monovalents choisis parmi les radicaux alkyle en $C_1$-$C_{20}$, phényle, méthyle et trifluoro-3,3,3 propyle,
- les radicaux $R_1$, identiques ou différents sont choisis parmi un radical R, un radical A, un radical vinyle et un radical hydroxyle,
- le radical A est un radical organique époxy-fonctionnel ayant de 4 à 20 atomes de carbone,

- r est un nombre entier compris entre 1 et 500,
- s est un nombre entier compris entre 0 et 200,
- t est un nombre entier compris entre 0 et 100,

sous réserve que si S = 0, les deux radicaux $R_1$ sont un radical vinyle, et t est au moins égal à 1, si t = 0, au moins un des radicaux $R_1$ est un radical A et s est au moins égal à 2.,

Et ceux de formule :

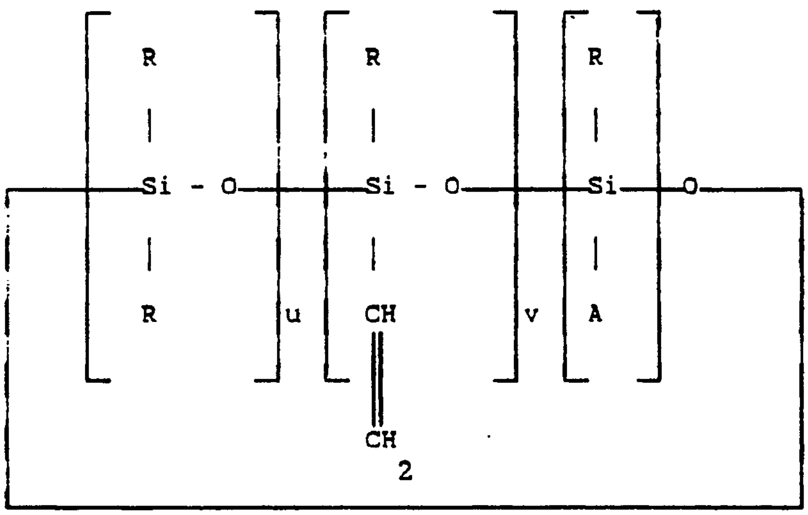

(2)

dans laquelle R et A ont la même signification qu'à la formule (1) ci-dessus.

- u est un nombre entier compris entre 0 et 7 inclus,
- v est un nombre entier compris entre 2 et 7 inclus,
- w est un nombre entier compris entre 1 et 7 inclus sous réserve que la somme de u + v + w soit au moins égale à 3 inférieure à 10.

9. - Composition organopolysiloxane selon la revendication 8, caractérisée en ce que le radical (A) est choisi parmi ceux de formules :

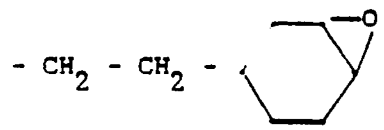

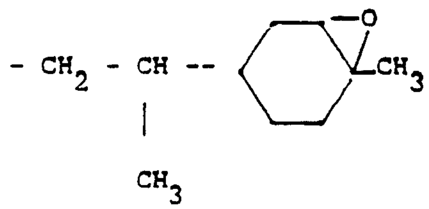

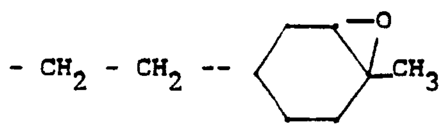

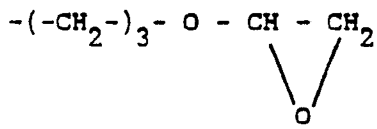

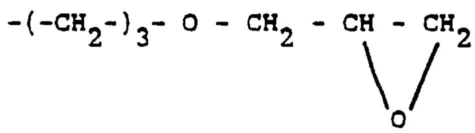

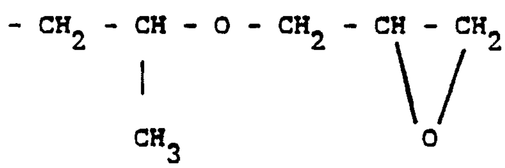

10. - Utilisation d'une composition telle que définie à l'une quelconque des revendications 1 à 8 pour l'encapsulation de composants électriques ou électroniques.

11. - Utilisation d'une composition telle que définie à l'une quelconque des revendications 1 à 8, pour enrober, encapsuler ou disperser un principe actif.

Office européen des brevets

# RAPPORT DE RECHERCHE EUROPEENNE

Numero de la demande

EP 90 42 0023

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 228 775 (DOW CORNING)<br>* le document en entier *<br>--- | 1-10 | C 08 L 83/06 |
| A | US-A-4 087 585 (J.R. SCHULZ)<br>* colonne 2, ligne 55 - colonne 3, ligne 7; colonne 6, lignes 14-33; colonne 6, ligne 66 - colonne 7, ligne 25; revendication 1 *<br>--- | 1-10 | |
| A | FR-A-2 325 693 (SHIN-ETSU)<br>* le document en entier *; & US - A - 40 77943 (Cat. D)<br>--- | 1-11 | |
| A | CHEMICAL ABSTRACTS<br>vol. 88, no. 16, 17 avril 1978, page 52, colonne 2, abrégé no. 106535k, Columbus, Ohio, US; & JP - A - 77 126 455 (TOSHIBA SILICONE) 24.10.77 * abrégé *<br>--- | 1-9 | |
| D,A | EP-A-0 188 895 (DOW CORNING)<br>* page 1, paragraphe 1; page 37, paragrahe 2 - page 38, paragraphe 1 *<br>----- | 11 | DOMAINES TECHNIQUES RECHERCHES (Int. Cl.5)<br>C 08 L 83/00 |

Le présent rapport a été établi pour toutes les revendications

| Lieu de la recherche | Date d'achèvement de la recherche | Examinateur |
|---|---|---|
| BERLIN | 10-04-1990 | HOEPFNER W.W.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)